# EUROPÄISCHE PATENTSCHRIFT

(11) **EP 2 935 105 B1**
(45) Veröffentlichungstag und Bekanntmachung des Hinweises auf die Patenterteilung: **26.07.2017**
(21) Anmeldenummer: 13811947.4
(22) Anmeldetag: 19.12.2013
(51) Int. Cl.: C01C 1/08, B05B 1/02, B01J 19/26, B01D 53/90, B01D 53/94, F01N 3/20, B01D 53/86

(54) **AMMONIAKGASGENERATOR SOWIE VERWENDUNG DESSELBEN ZUR REDUKTION VON STICKOXIDEN IN ABGASEN**
AMMONIA GAS GENERATOR AND USE OF THE SAME FOR REDUCING NITROGEN OXIDES IN EXHAUST GASES
GÉNÉRATEUR DE GAZ AMMONIAC ET SON UTILISATION POUR LA RÉDUCTION D'OXYDES D'AZOTE DANS LES GAZ D'ÉCHAPPEMENT

(30) Priorität: 21.12.2012 DE 102012025113; 21.12.2012 DE 102012025112
(43) Veröffentlichungstag der Anmeldung: 28.10.2015
(73) Patentinhaber: AlzChem AG, 83308 Trostberg (DE)
(72) Erfinder: GERHART, Christian, 83313 Siegsdorf (DE); MIDDELMANN, Henning, 58313 Herdecke (DE)
(74) Vertreter: Dey, Michael
(86) Internationale Anmeldenummer: PCT/EP2013/077436
(87) Internationale Veröffentlichungsnummer: WO 2014/096217

(56) Entgegenhaltungen:
- EP-A2- 1 956 206
- JP-A- 2006 122 792
- US-A1- 2012 087 840

## Beschreibung

Die vorliegende Erfindung betrifft einen Ammoniakgasgenerator zur Erzeugung von Ammoniak aus einer Ammoniakvorläufersubstanz, ein Verfahren zur Herstellung von Ammoniak und dessen Verwendung in Abgasnachbehandlungssystemen zur Reduktion von Stickoxiden in Abgasen.

In Abgasen von Verbrennungskraftmaschinen sind oftmals Stoffe enthalten, deren Emission in die Umwelt unerwünscht ist. Daher werden in vielen Ländern Grenzwerte für die Emission solcher Schadstoffe, wie beispielsweise im Abgas von Industrieanlagen oder Automobilen festgelegt, die einzuhalten sind. Zu diesen Schadstoffen zählen neben einer Reihe anderer Schadstoffe auch Stickoxide (NOₓ), wie insbesondere Stickstoffmonoxid (NO) oder Stickstoffdioxid (NO₂).

Die Reduzierung der Emission dieser Stickoxide aus Abgasen von Verbrennungsmotoren kann auf verschiedene Art und Weise erfolgen. Hervorzuheben ist an dieser Stelle die Reduktion durch zusätzliche Abgasnachbehandlungsmaßnahmen, die insbesondere auf die selektive katalytische Reduktion (selective catalytic reduction - SCR) zurückgreifen. Diesen Methoden ist gemeinsam, dass ein selektiv auf die Stickoxide wirkendes Reduktionsmittel dem Abgas zugegeben wird, worauf in Gegenwart eines entsprechenden Katalysators (SCR-Katalysator) eine Umwandlung der Stickoxide erfolgt. Hierbei werden die Stickoxide in weniger umweltschädliche Stoffe, wie beispielsweise Stickstoff und Wasser umgewandelt.

Ein heute bereits eingesetztes Reduktionsmittel für Stickoxide stellt Harnstoff (H₂N-CO-NH₂) dar, welches in Form einer wässrigen Harnstofflösung dem Abgas zugegeben wird. Dabei kann sich der Harnstoff im Abgasstrom in Ammoniak (NH₃) zersetzen, beispielsweise durch Einwirkung von Wärme (Thermolyse) und/ oder durch Reaktion mit Wasser (Hydrolyse). Der somit gebildete Ammoniak stellt das eigentliche Reduktionsmittel für Stickoxide dar.

Die Entwicklung von Abgasnachbehandlungssystemen für Automobile wird seit geraumer Zeit betrieben und ist Gegenstand zahlreicher Publikationen. So wird beispielsweise mit der europäischen Patentschrift EP 487 886 B1 ein Verfahren zur selektiven katalytischen NOₓ-Reduktion in sauerstoffhaltigen Abgasen von Dieselmotoren beschrieben, in dem Harnstoff und dessen Thermolyseprodukte als Reduktionsmittel eingesetzt werden. Zudem wird eine Vorrichtung zur Erzeugung vom Ammoniak in Form eines Röhrenverdampfers beschrieben, die eine Sprühvorrichtung, einen Verdampfer mit Verdampferrohr und einen Hydrolysekatalysator umfasst.

Des Weiteren wird mit der Europäischen Patentschrift EP 1 052 009 B1 ein Verfahren und eine Vorrichtung zur Durchführung des Verfahrens zur thermischen Hydrolyse und Dosierung von Harnstoff bzw. Harnstofflösungen in einem Reaktor unter Zuhilfenahme eines Abgasteilstroms beschrieben. In dem Verfahren wird einem Abgasstrang stromauf des SCR-Katalysators ein Teilstrom des Abgases entnommen und durch den Reaktor geleitet, wobei der nach der Hydrolyse im Reaktor mit Ammoniak beladene Teilstrom ebenfalls noch stromauf des SCR-Katalysators wieder in den Abgasstrang zurückgeführt wird.

Zudem wird mit der europäischen Patentschrift EP 1 338 562 B1 eine Vorrichtung und Verfahren beschrieben, welches die katalytische Reduktion von Stickoxiden durch Ammoniak nutzt. Der Ammoniak wird hierbei unter Bedingungen der Blitzthermolyse aus Harnstoff in fester Form sowie der Hydrolyse aus Isocyansäure gewonnen und dem Abgasstrom eines Fahrzeuges zugeleitet.

Des Weiteren wird mit der europäischen Patentanmeldung EP 1 348 840 A1 eine Abgasreinigungsanlage als eine als Ganzes transportable Baueinheit in Form eines 20-Fuß-Containers beschrieben. Die Anlage wird derart betrieben, dass eine Harnstoff- oder Ammoniaklösung direkt mittels einer Eindüsungsvorrichtung in den Abgasstrom eingedüst wird. Die Reduktion der in dem Abgas enthaltenden Stickoxide erfolgt an einem SCR-Katalysator.

Weiterhin wird mit der deutschen Patentanmeldung DE 10 2006 023 147 A1 eine Vorrichtung zur Erzeugung von Ammoniak beschrieben, die Teil eines Abgasnachbehandlungssystems ist.

Zudem wird weiterhin mit den internationale Anmeldung WO 2008/ 077 587 A1 und WO 2008/077588A1 ein Verfahren zur selektiven katalytischen Reduktion von Stickoxiden in Abgasen von Fahrzeugen mittels wässrigen Guanidiniumsalzlösungen beschrieben. In diesen Verfahren wird ein Reaktor eingesetzt, der aus den wässrigen Guanidiniumsalzlösungen Ammoniak erzeugt.

Neuere Entwicklungen auf dem Gebiet der Abgasnachbehandlung sind Gegenstand aktueller Arbeiten. So wurde in jüngerer Zeit auch das Konzept der AmmoniakErzeugung außerhalb eines Abgasstranges weiterverfolgt. Ausführungen zu Generatoren und Verfahren zum Betreiben dieser Generatoren sind den internationalen Anmeldungen PCT/EP2012/062757, PCT/EP2012/062750 und PCT/EP2012/062752 zu entnehmen.

Auch wenn Ammoniakgasgeneratoren seit geraumer Zeit bekannt sind, so ist dennoch bis heute keine Realisierung der Technik in einem Fahrzeug oder einer anderen Verwendung verwirklicht worden. Bis heute wurde das Konzept der Direkteinspritzung einer Ammoniakvorläufersubstanz in den Abgasstrom einer Brennkraftmaschine verfolgt, wobei diese Ammoniakvorläufersubstanz durch geeignete Maßnahmen im Abgasstrang in das eigentliche Reduktionsmittel zerfällt. Aufgrund von unvollständiger Zersetzung oder Nebenreaktionen von Zersetzungsprodukten im Abgasstrang werden jedoch immer wieder Ablagerungen beobachten, die zur Beeinträchtigung der im Abgasstrang weiterhin vorhandenen Katalysatoren und Filter führen.

Daher liegt der vorliegenden Erfindung die Aufgabe zugrunde einen Ammoniakgasgenerator sowie ein Verfahren zur Herstellung von Ammoniak bereitzustellen, der/das diese Nachteile des Standes der Technik überwindet. Insbesondere soll ein Ammoniakgasgenerator bereitgestellt werden, der außerhalb eines Abgasstranges einer Abgasanlage eines Verbrennungsmotors angeordnet werden kann. In das Abgas kann dann erfindungsgemäß der erzeugte Ammoniak und nicht eine Ammoniakvorläuferverbindung eingebracht werden. Der vorliegenden Erfindung liegt weiterhin die Aufgabe zugrunde, einen Ammoniakgasgenerator bereitzustellen, der einen einfachen Aufbau und eine kompakte Bauweise aufweist sowie eine hohe Umsatzrate von Ammoniakvorläufersubstanzen in Ammoniakgas bereitstellt und einen langen Einsatz ohne Wartung erlaubt. Zudem soll der Ammoniakgasgenerator universell einsetzbar sein, wobei insbesondere auch verschiedenartige Ammoniakvorläufersubstanzen zum Einsatz gebracht werden können.

Gelöst wird diese Aufgabe durch einen Ammoniakgasgenerator gemäß Anspruch 1 sowie ein Verfahren gemäß Anspruch 8. Damit ist ein Ammoniakgasgenerator (100) zur Erzeugung von Ammoniak aus einer Lösung einer Ammoniakvorläufersubstanz Gegenstand der vorliegenden Erfindung, der
i) eine Katalysatoreinheit (70), die einen Katalysator (60) zur Zersetzung und/oder Hydrolyse von Ammoniakvorläufersubstanzen in Ammoniak und eine dem Katalysator (60) vorgelagerte Mischkammer (51) umfasst, wobei der Katalysator (60) ein Katalysatorvolumen V_{Kat} und die Mischkammer (51) ein Mischkammervolumen V_{Misch} aufweist,
ii) eine Eindüsungsvorrichtung (40) zur Einbringung der Lösung der Ammoniakvorläufersubstanz in die Mischkammer (51), und
iii) einen Auslass (80) für das gebildete Ammoniakgas, umfasst, wobei die Eindüsungsvorrichtung (40) eine Düse (41) umfasst, die Tropfen mit einem Sauterdurchmesser D₃₂ von 26 bis 100 µm erzeugt und weiterhin, wobei das Verhältnis des Volumens der Mischkammer V_{Misch} zum Volumen des Katalysators V_{Kat} dem Verhältnis von 1 : 1 bis 5 : 1 entspricht.

Insbesondere kann die Eindüsungsvorrichtung eine Düse umfassen, die Tropfen mit einem Sauterdurchmesser D₃₂ von 26 bis 49 µm erzeugt.

Hervorzuheben ist an dieser Stelle, dass ein Ammoniakgasgenerator gemäß der vorliegenden Erfindung eine separate Baueinheit zur Erzeugung von Ammoniak aus Ammoniakvorläufersubstanzen ist. Eine solche Baueinheit kann beispielsweise zur Reduktion von Stickoxiden in Industrieabgasen oder zur Abgasnachbehandlung von Abgasen aus Verbrennungsmotoren, wie beispielsweise Dieselmotoren eingesetzt werden. Dieser Ammoniakgasgenerator kann autark arbeiten oder auch mit Hilfe von Abgasseitenströmen betrieben werden, wobei jedoch in jedem Fall der gebildete Ammoniak in den Abgasstrom eingebracht und erst in einem nachfolgenden Prozessschritt eine Reduzierung von Stickoxiden mittels Ammoniak stattfindet. Falls ein erfindungsgemäßer Ammoniakgasgenerator als separates Bauteil in einer Abgasnachbehandlungsanlage eines Verbrennungsmotors, beispielsweise eines Dieselmotors verwendet wird, kann somit eine Reduzierung der Stickoxide im Abgasstrom vorgenommen werden, ohne weitere Katalysatoren zur Spaltung von Ammoniakvorläufersubstanzen oder andere Bauteile in den Abgasstrom selbst einzubringen. Der mit dem erfindungsgemäßen Ammoniakgasgenerator erzeugte Ammoniak kann somit bedarfsgerecht in den Abgasstrom eingeleitet werden. Eine eventuelle Verkürzung der Lebensdauer des SCR-Katalysators durch Verunreinigungen in Form von Ablagerungen aus beispielsweise Ammoniakvorläufersubstanzen oder Produkten der Spaltung von Ammoniakvorläufersubstanzen wird ebenfalls vermieden.

Weiterhin soll im Zusammenhang mit der vorliegenden Erfindung unter einer Eindüsungsvorrichtung, die eine Düse umfasst, jedwede Vorrichtung oder Düse verstanden sein, die eine Lösung, vorzugsweise wässrige Lösung, einer Ammoniakvorläufersubstanz versprüht, vernebelt oder anderweitig zu Tropfen ausbildet, wobei die Lösung der Ammoniakvorläufersubstanz in Form von Tropfen ausgebildet wird, die einen Tropfen- oder Tröpfchendurchmesser D₃₂ von 26 bis 100 µm aufweisen. Der Tropfen- oder Tröpfchendurchmesser D₃₂ bezieht sich im Zusammenhang mit der vorliegenden Erfindung auf den Sauterdurchmesser entsprechend der Deutschen Industrienorm DIN 66 141.

Des Weiteren soll unter einer Katalysatoreinheit gemäß der vorliegenden Erfindung eine Baueinheit verstanden sein, die ein Gehäuse zur Aufnahme eines Katalysators, eine in Strömungsrichtung dem Katalysator vorgelagerte Mischkammer und mindestens einen Katalysator zur Zersetzung und/ oder Hydrolyse von Ammoniakvorläufersubstanzen in Ammoniak umfasst, wobei der Katalysator ein Katalysatorvolumen V_{Kat} und die Mischkammer ein Mischkammervolumen V_{Misch} aufweist. Die Mischkammer wird dabei in Strömungsrichtung begrenzt durch die Katalysatorstirnfläche einerseits und andererseits durch das Gehäuse der Katalysatoreinheit oder falls vorhanden durch eine Lochscheibe begrenzt. Gegebenenfalls kann die Katalysatoreinheit zusätzlich eine dem Katalysator in Strömungsrichtung nachgelagerte Auslasskammer zum Auslass des gebildeten Ammoniakgases umfassen.

Es hat sich gezeigt, dass trotz optimaler Eindüsgeometrie (Winkel und Abstand), insbesondere bei einer Anwendung mit Trägergasstrom, eine nicht optimale Gleichverteilung der Tröpfchen auf der Katalysatorstirnwand erreicht wird. Vollkommen überraschend konnte dieser Mangel behoben werden, indem eine Düse zum Einsatz gebracht wird, die Tropfen mit einem Sauterdurchmesser D₃₂ von 26 bis 100 µm erzeugt. Durch die gezielte Auswahl der Düse bzw. des gezielten Einsatzes einer Düse, die Tropfen mit einem Sauterdurchmesser von 26 bis 100 µm erzeugt, erfolgt eine Verteilung der Tropfen über nahezu den gesamten Strömungsquerschnitt und somit eine gleichförmigere Benetzung der Katalysatorstirnfläche. Hierdurch wiederum werden Ablagerungen vermieden und die Umsatzrate verbessert. Ohne an die Theorie gebunden zu sein, kann gesagt werden, dass Tropfen zu kleiner Größe eine zu geringe Trägheit aufweisen. Hierdurch wird die tropfenhaltige Strömung lediglich auf einen Teilbereich der Katalysatorstirnfläche aufgebracht. Durch die größere Trägheit der größeren Tropfen kann eine tropfenhaltige Strömung bereitgestellt wird, die nahezu 100 % der Katalysatorstirnfläche benetzt, insbesondere auch in Gegenwart eines Trägergasstroms.

Zudem konnte festgestellt werden, dass sich Tröpfchen mit einem Sauterdurchmesser D₃₂ von 26 bis 100 µm durch die Trägergasströmung weniger ablenken lassen und es zu einem homogeneren Sprühbild, speziell in den äußeren Bereichen (Bereich größer 80% des Durchmessers) der Katalysatorstirnfläche und einer insgesamt gleichmäßigeren Verteilung auf dem Katalysator kommt. Tröpfchen mit einem Sauterdurchmesser D₃₂ von 26 bis 100 µm behalten durch ihre Trägheit den ursprünglichen durch die Düse vorgegebenen Sprühwinkel bis zum Auftreffen auf die Katalysatorstirnfläche bei und es kommt deshalb zu einer gleichmäßigeren Benetzung der Katalysatorstirnfläche entsprechend des gegebenen Sprühwinkels der Düse.

Gleichzeitig konnte durch den Einsatz einer Düse, die Tropfen mit einem Sauterdurchmesser D₃₂ von 26 bis 100 µm erzeugt, ein einfacher Aufbau und eine kompakte Bauweise des Ammoniakgasgenerators selbst verwirklicht werden.

Weiterhin vollkommen unvorhersehbar konnte festgestellt werden, dass der notwendige Energiebedarf bzw. Druck zur Zerstäubung von Tröpfchen mit größerem Sauterdurchmesser (entspricht Bildung weniger neuer Flüssigkeitsoberfläche) deutlich geringer ist. Hierdurch ergibt sich eine besonders einfache Bauweise des Generators.

Gemäß der vorliegenden Erfindung umfasst die Eindüsungsvorrichtung eine Düse, die Tropfen mit einem Sauterdurchmesser D₃₂ von 26 µm, insbesondere mindestens 30 µm und besonders bevorzugt mindestens 32 µm erzeugt, wobei die Tropfen gleichzeitig oder unabhängig hiervon einen Sauterdurchmesser von höchstens 100 µm, insbesondere höchstens 90 µm, besonders bevorzugt höchstens 80 µm, besonders bevorzugt höchstens 70 µm, ganz besonders bevorzugt höchstens 60 µm und am meisten bevorzugt höchstens 49 µm und noch mehr bevorzugt höchstens 40 µm aufweisen.

Damit ist gemäß der vorliegenden Erfindung vorgesehen, dass die Eindüsungsvorrichtung ihrerseits eine Düse umfasst, die Tröpfchen mit einem Tröpfchendurchmesser D₃₂ in einem definierten Bereich erzeugt. Durch die Verwendung von solchen Düsen kann ein Ammoniakbildungsgrad AG von > 97 % erreicht werden. Zudem kann eine besonders gleichmäßige Verteilung der Lösung auf die Katalysatorstirnfläche erfolgen. Der Ammoniakbildungsgrad AG ist hierbei und im Folgenden definiert als die im Ammoniakgasgenerator erzeugte Molmenge NH₃ bezogen auf die theoretisch bei vollständiger Hydrolyse der Ammoniakvorläufersubstanz zu erzeugende Molmenge an Ammoniak. Ein Ammoniakbildungsgrad von > 97 % wird gemäß der vorliegenden Erfindung als vollständige Umsetzung betrachtet.

Es wird erfindungsgemäß durch eine gleichmäßige Tröpfchenbelastung eine Überschreitung der maximalen Stirnflächenbelastung in einzelnen Ringbereichen vermieden. Nur dadurch kann gewährleistet bleiben, dass eine annähernd vollständige Umsetzung auf der gesamten Katalysatorstirnfläche erfolgt und es nicht bei längerem Einsatz zu ringförmigen Ablagerungen an der Katalysatorstirnfläche kommt. Damit kann eine zusätzliche Wartung vermieden werden.

Gemäß einer besonders bevorzugten Variante kann insbesondere vorgesehen sein, dass die Eindüsungsvorrichtung ihrerseits eine Düse umfasst, die gemäß der vorliegenden Erfindung eine sogenannte Zweistoffdüse ist. Unter einer Zweistoffdüse wird hierbei eine Düse verstanden, die als Treibmittel ein unter Druck stehendes Gas, im Allgemeinen Luft, zum Oberflächenaufbruch der flüssigen Phase und damit zur Tröpfchenbildung verwendet. Dies unter Druck stehende Gas wird auch als Zerstäubungsluft bezeichnet. Damit ist auch ein Ammoniakgasgenerator Gegenstand der vorliegenden Erfindung, der eine Eindüsungsvorrichtung umfasst, die eine Zweistoffdüse ist, in der die in die Mischkammer einzubringende Lösung mit Druckluft beaufschlagt wird.

Alternativ oder unabhängig hiervon kann auch vorgesehen sein, dass der Ammoniakgasgenerator eine Düse umfasst, die eine erste Anzahl an Düsenöffnungen zur Einbringung der Lösung in die Mischkammer aufweist, die von einer zweiten Anzahl an Düsenöffnungen zur Einbringung von Druckluft oder Trägergas in die Mischkammer ringförmig umgeben ist.

Alternativ kann auch vorgesehen sein, dass der Ammoniakgasgenerator eine Düse umfasst, die druckluftlos betrieben wird. Diese sogenannte Einstoffdüse oder Injektor arbeitet mit einem mechanischen Flüssigkeitsaufbruch ohne zusätzlichen Luftstrom. Die Einstoffdüse erzeugt Tropfen mit einem Sauterdurchmesser D₃₂ von 26 bis 100 µm. Dabei ist besonders bevorzugt eine Einstoffdüse mit mehreren Öffnungen bzw. Bohrlöchern. Ganz besonders bevorzugt ist die Kombination von mehr als einer Einstoffdüse für die Einbringung der Lösung in den Ammoniakgasgenerator.

Gemäß der vorliegenden Erfindung ist vorgesehen, dass das Verhältnis des Volumens der Mischkammer V_{Misch} zum Volumen des Katalysators V_{Kat} dem Verhältnis von 1 : 1 bis 5 : 1 entspricht. Überraschender Weise hat sich gezeigt, dass die eingesprühte Ammoniakvorläufersubstanz dann vollständig (Umsatz > 97 %) in Ammoniak zersetzt werden kann, wenn die Tröpfchen der Lösung bereits vor dem Auftreffen auf die Katalysatorstirnfläche teilweise verdampft werden. Dies kann dadurch gewährleistet sein, dass das Volumen der Mischkammer größer ist als das Volumen des Katalysators. Durch ein teilweises Verdampfen der Tröpfchen wird der Lösung bereits genügend Energie zugeführt, so dass ein zu starkes Abkühlen an der Katalysatorstirnfläche durch zu große Tropfen vermieden wird und damit einer schlechteren Zersetzung bzw. Nebenproduktbildung entgegengewirkt wird. Außerdem wird durch ein entsprechendes Mischkammervolumen V_{Misch} sichergestellt, dass die versprühte Ammoniakvorläufersubstanz als Aerosol homogen im Transportgasstrom verteilt über den Querschnitt auf dem Katalysator auftrifft und Spots mit zu hoher Konzentration, was wiederum eine schlechtere Umsetzung zur Folge hätte, vermieden werden. Ganz besonders bevorzugt ist hierbei vorgesehen, dass das Verhältnis des Volumens der Mischkammer V_{Misch} zum Volumen des Katalysators V_{Kat} von 2 : 1 bis 5 : 1, besonders bevorzugt von 1 : 1 bis 5 : 1, besonders bevorzugt 3 : 1 bis 5 : 1 und ganz besonders bevorzugt 3,5 : 1 bis 5 : 1 beträgt.

Gemäß einer weiteren bevorzugten Ausführung umfasst der Ammoniakgasgenerator gemäß der vorliegenden Erfindung weiterhin mindestens einen Einlass für ein Trägergas, der insbesondere einen senkrecht zur Katalysatorstirnfläche gerichteten Trägergasstrom erzeugt. Hierbei kann weiterhin bevorzugt sein, dass der Ammoniakgasgenerator eine Lochscheibe umfasst, in dessen Zentrum

Düsenöffnung der Düse angeordnet ist. Dabei weist die Lochscheibe weiterhin bevorzugt eine Vielzahl an Öffnungen auf, durch die der eingebrachte Trägergasstrom in eine Vielzahl an Teilströme gespalten wird. Die Öffnungen sind besonders bevorzugt derart gestaltet, dass eine Vielzahl an parallelen Trägergasteilströmen (parallel zur Strömungsrichtung der Katalysatoreinheit) erzeugt werden kann.

Damit ist auch unabhängig von einem Ammoniakgasgenerator der zuvor beschriebenen Art ein Ammoniakgasgenerator zur Erzeugung von Ammoniak aus einer Lösung einer Ammoniakvorläufersubstanz Gegenstand der vorliegenden Erfindung, der i) eine Katalysatoreinheit, die einen Katalysator zur Zersetzung und/ oder Hydrolyse von Ammoniakvorläufersubstanzen in Ammoniak und eine dem Katalysator vorgelagerte Mischkammer umfasst, wobei der Katalysator ein Katalysatorvolumen V_{Kat} und die Mischkammer ein Mischkammervolumen V_{Misch} aufweist, ii) eine Eindüsungsvorrichtung zur Einbringung der Lösung der Ammoniakvorläufersubstanz in die Mischkammer, und iii) einen Auslass für das gebildete Ammoniakgas, wobei der Ammoniakgasgenerator weiterhin iv) mindestens einen Einlass für ein Trägergas umfasst, der einen senkrecht zur Katalysatorstirnfläche gerichteten Trägergasstrom erzeugt.

Insbesondere umfasst dieser Ammoniakgasgenerator auch die Eindüsungsvorrichtung, die ihrerseits eine Düse umfasst, die Tropfen mit einem Sauterdurchmesser D₃₂ von 26 bis 100 µm erzeugt. Insbesondere kann die Eindüsungsvorrichtung eine Düse umfassen, die Tropfen mit einem Sauterdurchmesser D₃₂ von 26 bis 49 µm und ganz besonders bevorzugt von 26 bis 40 µm erzeugt.

Überraschenderweise hat sich herausgestellt, dass im Betrieb des Ammoniakgasgenerators mit einem senkrecht zur Katalysatorstirnfläche geführten Trägergasstrom (nachfolgend synonym auch Transportgasstrom) Ablagerungen an den Wandungen der Katalysatoreinheit im Bereich der Mischkammer unterbunden werden können und eine dauerhaft gute Durchmischung von Trägergas (nachfolgend synonym auch Transportgas) und der Lösung der Ammoniakvorläufersubstanz bereitgestellt werden kann. Wird ein solcher senkrecht zur Katalysatorstirnfläche geführten Trägergasstrom nicht eingesetzt, so können durch das Versprühen der Lösungen von Ammoniakvorläufersubstanz in die Mischkammer ein Benetzen der Wandung der Katalysatoreinheit im Bereich der Mischkammer erfolgen und unerwünschte Nebenreaktionen wie beispielsweise eine Polymerisation der Ammoniakvorläufersubstanz erfolgen. Diese Nebenreaktionen führen zu unerwünschten Ablagerungen im Bereich der Mischkammer, wodurch eine für die Funktion des Generators außerordentlich wichtige Durchmischung von Trägergas und Lösung der Ammoniakvorläufersubstanz dauerhaft nicht weiter ermöglicht ist. Aufgrund der mangelhaften Durchmischung des Trägergases mit der Lösung sind zudem weitere Ablagerungen im und am Katalysator selbst zu beobachten. Durch den senkrecht zur Katalysatorstirnfläche geführten Trägergasstrom wird eine Schleierströmung mit den Tröpfchen erzeugt, die axial in Richtung des Hydrolysekatalysators auf die Hydrolysekatalysatorstirnfläche geführt wird. Diese Schleierströmung ermöglicht eine sehr gute Umsetzung zum Ammoniak am Katalysator.

Die Zuführung des Trägergases erfolgt im Kopfbereich des Generators, vorzugsweise in Höhe der Eindüsungsvorrichtung der Ammoniakvorläuferlösung in die Katalysatoreinheit bzw. in die Mischkammer.

Das Trägergas und insbesondere der senkrecht zur Katalysatorstirnfläche geführte Trägergasstrom, wird vorzugsweise mit einer Temperatur von bis zu 550 °C, bevorzugt mit einer Temperatur von 250 bis 550 °C, weiterhin bevorzugt mit einer Temperatur von 250 bis 400 °C und ganz besonders bevorzugt mit einer Temperatur von 300 bis 350 °C in die Mischkammer eingeführt. Es kann jedoch auch vorgesehen sein, dass das Trägergas und insbesondere der senkrecht zur Katalysatorstirnfläche geführten Trägergasstrom, mit einer Temperatur von weniger als 250 °C, insbesondere von weniger als 200 °C, weiterhin bevorzugt von weniger als 150 °C, besonders bevorzugt von weniger als 100 °C und ganz besonders bevorzugt von weniger als 80 °C in die Mischkammer eingebracht wird, wobei die Temperatur gleichzeitig mindestens 10°C, insbesondere mindestens 20 °C und ganz besonders bevorzugt 25 °C betragen soll.

Weiterhin überraschend hat sich gezeigt, dass durch den Einsatz einer Lochscheibe der eingebrachte Trägergasstrom in eine Vielzahl an Teilströme aufgespalten werden kann, und hierdurch eine besonders gleichmäßige Verteilung der gebildeten Tropfen auf der Katalysatorstirnfläche erzeugt werden kann. Die gleichmäßige Verteilung der gebildeten Tropfen auf der Katalysatorstirnfläche kann dabei insbesondere weiterhin verbessert werden, wenn im Zentrum der Lochscheibe die Düsenöffnung der Düse angeordnet ist. Somit kann mit der Vielzahl an Teilströmen des Trägergases ein allseits umhüllender Mantel für die eingesprühten Tropfen bereitgestellt werden. Dieser Mantel verhindert die Ablagerung von Ammoniakvorläufersubstanzen oder nicht erwünschten Abbauprodukten hieraus an den Innenwandungen der Katalysatoreinheit.

Insbesondere wird mit der vorliegenden Erfindung ein Ammoniakgasgenerator bereitgestellt, der autark vom Abgasstrom eines Verbrennungsmotors oder einer Industrieanlage, das heißt ohne Zuhilfenahme eines Abgasstroms oder Abgasteilstroms aus einem Verbrennungsgas als Trägergas arbeitet. Insbesondere wird in dem erfindungsgemäßen Ammoniakgasgenerator Ammoniak aus einer Ammoniakvorläufersubstanz gebildet in Abwesenheit eines Abgasstroms.

Damit ist gemäß einem weiteren Aspekt auch ein Verfahren zur Herstellung von Ammoniak, insbesondere zur kontinuierlichen Herstellung von Ammoniak, aus einer Lösung einer Ammoniakvorläufersubstanz Gegenstand der vorliegenden Erfindung, indem der hiermit beschriebene Ammoniakgasgenerator zum Einsatz gebracht wird. In diesem Verfahren wird die Lösung derart in die Katalysatoreinheit eingebracht, dass die Lösung in Form von Tropfen mit einem Sauterdurchmesser D₃₂ von 26 bis 100 µm in Katalysatoreinheit eingedüst wird. Besonders bevorzugt ist ein Verfahren, in dem ein Trägergas in Form eines senkrecht zur Katalysatorstirnfläche geführten Trägergasstroms, insbesondere in Form von parallelen Strahlen, in die Katalysatoreinheit eingebracht wird. Hierbei kann weiterhin besonders bevorzugt vorgesehen sein, dass die Lösung der Ammoniakvorläufersubstanz als Aerosol in eine Vielzahl an parallelen Strahlen des Trägergases eingebracht wird.

Gleichzeitig oder unabhängig hiervon kann dieses Verfahren mit einem Trägergas oder einem senkrecht zur Katalysatorstirnfläche geführten Trägergasstrom ausgeführt werden, das/ der eine Temperatur von bis zu 550 °C aufweist. Bevorzugt weist dieses Trägergas oder dieser Trägergasstrom eine Temperatur von von 250 bis 550 °C oder 10 bis 200 °C auf. Überraschender Weise hat sich herausgestellt, dass der Ammoniakgasgenerator auch mit einem Trägergas oder einem Trägergasstrom mit einer Temperatur unterhalb der Zersetzungstemperatur der Ammoniakvorläufersubstanz betrieben werden kann. Die benötigte Energie zur Zersetzung wird hierbei im Wesentlichen durch den beheizbaren Katalysator bereitgestellt. Überraschender Weise ist diese Energiezufuhr ausreichend um einen vollständigen Umsatz und eine hohe Umsatzrate von > 97% zu erzielen.

Somit ist insbesondere auch ein Verfahren Gegenstand der vorliegenden Erfindung, in dem ein Trägergas mit einer Temperatur T_{(K)} im Bereich von 10 bis 200 °C in die Mischkammer (51) eingebracht wird, wobei die Lösung in Form von Tropfen mit einem Sauterdurchmesser D₃₂ von 26 bis 100 µm in Katalysatoreinheit eingedüst wird.

Weiterhin bevorzugt kann das Trägergas und insbesondere der senkrecht zur Katalysatorstirnfläche geführten Trägergasstrom, mit einer Temperatur von weniger als 200 °C, weiterhin bevorzugt von weniger als 150 °C, besonders bevorzugt von weniger als 100 °C und ganz besonders bevorzugt von weniger als 80 °C in die Mischkammer eingebracht oder eingedüst werden, wobei die Temperatur gleichzeitig mindestens 10°C, insbesondere mindestens 20 °C und ganz besonders bevorzugt 25 °C betragen soll.

Als Katalysator zur Zersetzung und/ oder Hydrolyse von Ammoniakvorläufersubstanzen kann im Rahmen der vorliegenden Erfindung jeder Katalysator verwendet werden, der die Freisetzung von Ammoniak aus der Vorläufersubstanz unter katalytischen Bedingungen ermöglicht. Ein bevorzugter Katalysator hydrolisiert die Ammoniakvorläufersubstanz zu Ammoniak und weiteren unschädlichen Stoffen wie Stickstoff und Kohlendioxid und Wasser. Bevorzugt handelt es sich bei dem Katalysator somit um einen Hydrolysekatalysator.

Wird eine Ammoniakvorläufersubstanz-Lösung, beispielsweise eine Guanidiniumsalz-Lösung, insbesondere eine Guanidiniumformiat-Lösung, eine Harnstoff-Lösung oder Mischungen hiervon verwendet, so kann die katalytische Zersetzung zu Ammoniak in Gegenwart von katalytisch aktiven, nicht oxidationsaktiven Beschichtungen aus Oxiden, ausgewählt aus der Gruppe Titandioxid, Aluminiumoxid und Siliciumdioxid sowie deren Mischungen, oder/und hydrothermal stabilen Zeolithen, die vollständig oder teilweise metallausgetauscht sind, insbesondere Eisenzeolithen vom ZSM 5- oder BEA-Typ, vorgenommen werden. Als Metalle kommen hierbei insbesondere die Nebengruppen-Elemente und vorzugsweise Eisen oder Kupfer in Frage. Die Metalloxide wie Titanoxid, Aluminiumoxid sowie Siliciumdioxid werden vorzugsweise auf metallischen Trägermaterialien wie z. B. Heizleiter-Legierungen (insbesondere Chrom-Aluminium-Stähle) aufgebracht.

Besonders bevorzugte Katalysatoren sind Hydrolysekatalysatoren, die insbesondere katalytisch aktive Beschichtungen aus Titandioxid, Aluminiumoxid und Siliciumdioxid sowie deren Mischungen hiervon umfassen.

Alternativ kann die katalytische Zersetzung der Guanidiniumformiat-Lösungen bzw. der übrigen Komponenten auch zu Ammoniak und Kohlendioxid erfolgen, wobei katalytisch aktive Beschichtungen aus Oxiden, ausgewählt aus der Gruppe Titandioxid, Aluminiumoxid und Siliciumdioxid sowie deren Mischungen, oder/und hydrothermal stabilen Zeolithen, die vollständig oder teilweise metallausgetauscht sind, eingesetzt werden, die mit Gold und/oder Palladium als oxidationsaktive Komponenten imprägniert sind. Die entsprechenden Katalysatoren mit Palladium und/oder Gold als Aktivkomponenten weisen vorzugsweise einen Edelmetallgehalt von 0,001 bis 2 Gew.-%, insbesondere 0,01 bis 1 Gew.-% auf. Mit Hilfe derartiger Oxidationskatalysatoren ist es möglich, die unerwünschte Bildung von Kohlenmonoxid als Nebenprodukt bei der Zersetzung des Guanidiniumsalzes, insbesondere bei der Zersetzung von Formiaten, bereits bei der Ammoniakerzeugung zu vermeiden.

Bevorzugt wird für die katalytische Zersetzung des Guanidiniumformiats sowie ggf. den weiteren Komponenten eine katalytische Beschichtung mit Palladium oder/und Gold als Aktivkomponenten mit einem Edelmetallgehalt von 0,001 bis 2 Gew.-%, insbesondere 0,01 bis 1 Gew.-% eingesetzt.

Somit wird hierin ein Ammoniakgasgenerator beschrieben, der einen Hydrolysekatalysator mit einer katalytisch aktive Beschichtung umfasst, die mit Gold und/ oder Palladium imprägniert ist, insbesondere mit einem Gehalt an Gold und/oder Palladium von 0,001 bis 2 Gew.-% (bezogen auf die katalytische Beschichtung). Weiterhin bevorzugt weist dieser Katalysator eine katalytisch aktive Beschichtung aus Oxiden ausgewählt aus der Gruppe Titandioxid, Aluminiumoxid und Siliciumdioxid sowie deren Mischungen, oder/und hydrothermal stabilen Zeolithen auf, die mit Gold und/oder Palladium imprägniert ist, wobei weiterhin bevorzugt der Gehalt an Gold und/oder Palladium 0,001 bis 2 Gew.-% (bezogen auf die katalytische Beschichtung) beträgt.

Es ist im Rahmen der vorliegenden Erfindung möglich, dass man einen Hydrolysekatalysator einsetzt, der in Strömungsrichtung aus mindestens zwei Abschnitten besteht, wobei der erste Abschnitt nicht oxidationsaktive Beschichtungen und der zweite Abschnitt oxidationsaktive Beschichtungen enthält. Vorzugsweise besteht 5 bis 90 Vol.-% dieses Katalysators aus nicht oxidationsaktiven Beschichtungen und 10 bis 95 Vol-% aus oxidationsaktiven Beschichtungen und 10 bis 95 Vol-% aus oxidationsaktiven Beschichtungen. Insbesondere bestehen 15 bis 80 Vol-% dieses Katalysators aus nicht oxidationsaktiven Beschichtungen und 20 bis 85 Vol-% aus oxidationsaktiven Beschichtungen. Alternativ kann man die Hydrolyse auch in Gegenwart von zwei hintereinander angeordneten Katalysatoren durchführen, wobei der erste Katalysator nicht oxidationsaktive Beschichtungen und der zweite Katalysator oxidationsaktive Beschichtungen enthält. Weiterhin bevorzugt kann es sich bei dem ersten Hydrolysekatalysator auch um einen beheizten Katalysator und bei dem zweiten Hydrolysekatalysator um einen nicht beheizten Katalysator handeln.

Darüber hinaus kann vorgesehen sein, dass man einen Hydrolysekatalysator einsetzt, der aus mindestens zwei Abschnitten besteht, wobei der in Strömungsrichtung angeordnete erste Abschnitt in Form eines beheizten Katalysators und der in Strömungsrichtung angeordnete zweite Abschnitt in Form eines nicht beheizten Katalysators vorliegt. Vorzugsweise besteht der Katalysator zu 5 bis 50 Vol.-% aus dem ersten Abschnitt und zu 50 bis 95 Vol-% aus dem zweiten Abschnitt.

Gemäß einer besonders bevorzugten Ausführung der vorliegenden Erfindung ist daher vorgesehen, dass der Ammoniakgasgenerator eine Katalysatoreinheit mit einem mindestens zweigeteilten, besonders bevorzugt mindestens dreigeteilten, Hydrolysekatalysator umfasst, dessen in Strömungsrichtung erster Teil in Form eines beheizten Katalysators, der vorzugsweise eine direkte elektrische Widerstandsheizung und/oder eine Mantelheizung aufweist, ausgebildet ist, während der zweite Teil in Form eines nicht beheizten Katalysators ausgeführt ist, dem ganz besonders bevorzugt stromab als dritter Teil ein nicht beheizter Katalysator mit Mischerstruktur folgt.

Es hat sich ergeben, dass für eine vollständige katalytische Umsetzung der Ammoniakvorläufersubstanzen vorzugsweise Katalysatoren mit einer Katalysatorzellenzahl von mindestens 9,3 Zellen pro cm² (60 cpsi) (cpsi: cells per square inch - Zellenanzahl an der Stirnfläche des Katalysators) und den bereits oben beschriebenen Katalysatorvolumina eingesetzt werden. Dabei begrenzt der ansteigende Gegendruck (Druckverlust über den Katalysator) die Katalysatorzellenzahl auf höchstens 124 Zellen pro cm² (800 cpsi) für eine Anwendung in einem Ammoniakgasgenerator. Besonders bevorzugt sind solche Katalysatoren, insbesondere Hydrolysekatalysatoren, die eine Katalysatorzellenzahl von 15,5 bis 93 Zellen pro cm² (100 bis 600 cpsi pro inch²) Stirnfläche, von 15,5 bis 77,5 Zellen pro cm² (100 bis 500 cpsi pro inch²) Stirnfläche und ganz besonders bevorzugt von 15,5 bis 62 Zellen pro cm² (100 bis 400 cpsi pro inch²) Stirnfläche des Katalysators aufweisen.

Hinsichtlich der Ausgestaltung der Katalysatoreinheit hat sich in den Testungen herausgestellt, dass eine zylindrische Bauform besonders gut geeignet ist. Hierbei kann der Trägergasstrom seine volle Wirkung entfalten. Andere Bauformen sind hingegen weniger geeignet, da hierbei eine zu starke Verwirbelung zu beobachten ist. Somit ist auch ein Ammoniakgasgenerator Gegenstand der vorliegenden Erfindung, der eine Katalysatoreinheit umfasst, die in Form eines Zylinders ausgebildet ist.

Darüber hinaus hat sich als besonders vorteilhaft erwiesen, wenn der Ammoniakgasgenerator eine Katalysatoreinheit umfasst, die ihrerseits mindestens eine thermische Isolationsschicht, insbesondere eine thermische Isolationsschicht aus mikroporösem Dämmmaterial aufweist.

Des Weiteren kann vorgesehen sein, dass der Ammoniakgasgenerator weiterhin eine Dosiereinheit zur Dosierung der Lösung der Ammoniakvorläufersubstanz umfasst, die der Eindüsungsvorrichtung vorgeschaltet ist. Somit kann eine präzise Regelung des zu Erzeugenden Ammoniaks über diese Dosiereinheit erfolgen. Wird beispielsweise ein vermehrter Ausstoß an Stickoxiden im Abgas eines Motors verzeichnet, so kann über die gezielte Steuerung der mit der Eindüsungsvorrichtung eingedüsten Menge an Vorläufersubstanz eine definierte Menge an Ammoniak freigesetzt werden.

Als Ammoniakvorläufersubstanzen werden gemäß der vorliegenden Erfindung chemische Substanzen verstanden, die in eine Lösung überführt werden können und die Ammoniak mittels physikalischer und/oder chemischer Prozesse abspalten oder in sonstiger Form freisetzen können. Als Ammoniakvorläuferverbindungen können gemäß der vorliegenden Erfindung insbesondere Harnstoff, Harnstoffderivate, Guanidine, Biguanidine sowie Salze dieser Verbindungen sowie Salze des Ammoniaks eingesetzt werden. Insbesondere können gemäß der vorliegenden Erfindung Harnstoff und Guanidine oder Salze hiervon eingesetzt werden. Insbesondere können solche Salze eingesetzt werden, die aus Guanidinen und organischen oder anorganischen Säuren gebildet werden. Als besonders bevorzugt sind hierbei Guanidiniumsalze der allgemeinen Formel (I) anzusehen, 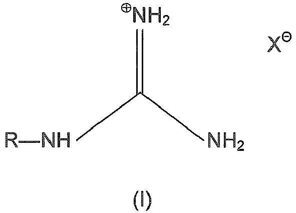 wobei
- R =: H, NH₂ oder C₁-C₁₂-Alkyl,
- X^{⊖} =: Acetat, Carbonat, Cyanat, Formiat, Hydroxid, Methylat oder Oxalat, bedeuten.

Besonders bevorzugt ist Guanidiniumformiat.

Im Rahmen der vorliegenden Erfindung können diese Guanidiniumsalze als Einzelsubstanz oder als Mischung aus zwei oder mehreren unterschiedlichen Guanidiniumsalzen verwendet werden. Gemäß einer bevorzugten Ausführungsform werden die erfindungsgemäß eingesetzten Guanidiniumsalze mit Harnstoff und/oder Ammoniak und/oder Ammoniumsalzen kombiniert. Alternativ können gemäß einer weiteren Ausführung der vorliegenden Erfindung jedoch auch wässrige Harnstofflösungen eingesetzt werden. Die Mischungsverhältnisse von Guanidiniumsalz mit Harnstoff sowie Ammoniak bzw. Ammoniumsalzen können in weiten Grenzen variiert werden. Es hat sich jedoch als besonders vorteilhaft erwiesen, wenn die Mischung von Guanidiniumsalz und Harnstoff einen Guanidiniumsalz-Gehalt von 5 bis 60 Gew.-% und einen Harnstoff-Gehalt von 5 bis 40 Gew.-%, insbesondere von 5 bis 35 Gew.-% besitzt. Des Weiteren sind Mischungen von Guanidiniumsalzen und Ammoniak bzw. Ammoniumsalzen mit einen Gehalt an Guanidiniumsalz von 5 bis 60 Gew.-% und von Ammoniak bzw. Ammoniumsalz von 5 bis 40 Gew.-% als bevorzugt anzusehen. Alternativ kann jedoch auch eine Harnstoff-Lösung insbesondere eine wässrige Harnstofflösung verwendet werden.

Als Ammoniumsalze haben sich hierbei vor allem Verbindungen der allgemeinen Formel (II) bewährt

R-NH₃^{⊕} X^{⊖} (II)

wobei
- R =: H, NH₂ oder C₁-C₁₂-Alkyl,
- X^{⊖} =: Acetat, Carbonat, Cyanat, Formiat, Hydroxid, Methylat oder Oxalat bedeuten.

Die erfindungsgemäß eingesetzten Ammoniakvorläufersubstanzen, insbesondere Guanidiniumsalze sowie ggf. die weiteren Komponenten, bestehend aus Harnstoff bzw. Ammoniumsalzen kommen in Form einer Lösung zum Einsatz, wobei als Lösemittel vor allem Wasser und/oder ein C₁-C₄-Alkohol bevorzugt eingesetzt werden. Die wässrigen und/oder alkoholischen Lösungen weisen hierbei einen bevorzugten Feststoffgehalt von 5 bis 85 Gew.-%, insbesondere 30 bis 80 Gew.-%, auf.

Dabei hat sich überraschend gezeigt, dass gemäß der vorliegenden Erfindung sowohl wässrige Guanidinformiatlösung in der Konzentration von 20 bis 60 Gew.-%, als auch wässrige Harnstofflösung in der Konzentration von 25 bis 40 Gew.-% als auch wässrige Mischungen aus Guanidiniumformiat und Harnstoff-Lösungen, wobei Guanidiniumformiat und Harnstoff in einer Konzentration von 5 bis 60 Gew.-% Guanidiniumformiat und 5 bis 40 Gew.-% Harnstoff in der Mischung enthalten ist, besonders gut eingesetzt werden können.

Die wässrigen Lösung der Ammoniakvorläufersubstanzen, insbesondere der Guanidiniumsalze, der Gemische von Guanidiniumsalze oder der Guanidiniumsalze in Kombination mit Harnstoff in Wasser besitzen hierbei ein bevorzugtes Ammoniak-Bildungspotential von 0,2 bis 0,5 kg Ammoniak pro Liter Lösung, insbesondere 0,25 bis 0,35 kg Ammoniak pro Liter Lösung.

Die hierin beschriebenen Ammoniakgasgeneratoren sind aufgrund ihrer kompakten Bauweise besonders für den Einsatz in Industrieanlagen, in Verbrennungsmotoren wie beispielsweise Dieselmotoren und Benzinmotoren, sowie Gasmotoren geeignet. Daher umfasst der vorliegenden Erfindung auch die Verwendung eines Ammoniakgasgenerators gemäß der beschriebenen Art sowie die Verwendung des beschriebenen Verfahrens zur Reduktion von Stickoxiden in Abgasen aus Industrieanlagen, aus Verbrennungsmotoren wie beispielsweise Dieselmotoren und Benzinmotoren, sowie aus Gasmotoren. Des Weiteren umfasst die vorliegende Erfindung damit auch ein Abgasnachbehandlungssystem umfassend einen Ammoniakgasgenerator der hiermit beschriebenen Art.

Insbesondere umfasst die vorliegende Erfindung auch ein Abgasnachbehandlungssystem das weiterhin einen Venturimischer umfasst, wobei der Auslass für das gebildete Ammoniakgas und der Venturimischer durch eine Leitung verbunden sind, insbesondere direkt verbunden sind. Ganz besonders bevorzugt umfasst die Erfindung auch ein Abgasnachbehandlungssystem, das weiterhin einen Venturimischer umfasst, wobei der Auslass für das gebildete Ammoniakgas und der Venturimischer durch eine Leitung verbunden sind, insbesondere direkt verbunden sind, und der Venturimischer Bestandteil der Abgasleitung eines Fahrzeugs ist, wobei der Venturimischer in Strömungsrichtung des Abgases vor einem SCR-Katalysator angeordnet ist.

Es hat sich besonders überraschend herausgestellt, dass durch die direkte Verbindung zwischen dem Ausgang des Ammoniakgasgenerators für das Ammoniakgas und einem Venturimischer in einem Abgasstrang eines Kraftfahrzeugs, ein Druckgefälle aufgebaut werden kann, mit welchem der erzeugte Ammoniak ohne weitere Hilfsmittel in den Abgasstrang eingebracht werden kann. Wesentlich hierbei ist, dass das Ammoniakgas direkt in den Venturimischer eingebracht wird. Somit kann gleichzeitig auch eine genügend hohe Verwirbelung des zu reduzierenden Abgases und dem Ammoniakgas erfolgen.

Vorzugsweise ist die Anordnung der Eindüsungsvorrichtung und des Hydrolysekatalysators innerhalb des erfindungsgemäßen Ammoniakgenerators derart, dass die Eindüsungsvorrichtung eine Düse umfasst, die einen theoretischen Sprühwinkel α von 10 Grad bis 90 Grad aufweist und der Abstand der Düsenöffnung zur Stirnfläche des Katalysators von 15 bis 2.000 mm beträgt.

Weiterhin bevorzugt wird die Lösung der Ammoniakvorläufersubstanz derart eingebracht, dass die Stirnflächenbelastung des Katalysators 0,2 bis 15 g/(h·cm²), vorzugsweise mindestens 1,0 und noch mehr bevorzugt mindestens 3,0 g/(h·cm²) beträgt.

Im Folgenden wird die vorliegende Erfindung anhand von Zeichnungen und zugehörigen Beispielen näher erläutert. Hierbei zeigt
- Figur 1:: eine schematische Ansicht eines erfindungsgemäßen Ammoniakgasgenerators im axialen Querschnitt,
- Figur 2:: ein schematischer Aufbau einer Abgasanlage in einem Fahrzeug,
- Figur 3:: einen radialen Querschnitt der Mischkammer (Draufsicht) im Bereich der Trägergasstromzuführung.

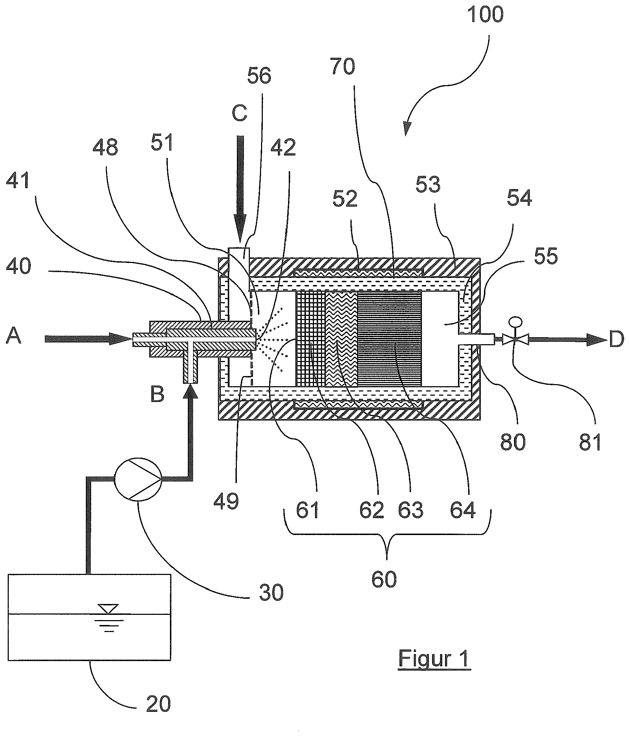

Mit Figur 1 ist ein erster Ammoniakgasgenerator (100) gemäß der vorliegenden Erfindung dargestellt. Der Generator (100) liegt in Form eines Zylinders vor und umfasst eine Eindüsungsvorrichtung (40), eine Katalysatoreinheit (70) und einen Auslass (80) für das gebildete Ammoniakgas. Die Katalysatoreinheit (70) besteht aus einem mehrteiligen Hydrolysekatalysator (60), einer Mischkammer (51) und einer Austrittskammer (55). Die Mischkammer wird in Längsrichtung (Strömungsrichtung) begrenzt durch eine Lochscheibe (48) mit einer Vielzahl an Öffnungen (Im Betriebszustand wird die Ammoniakvorläuferlösung (B) aus einem Vorratsbehälter (20) über eine Dosierpumpe (30) zusammen mit einem Zerstäubungsluftstrom (A) über eine Zweistoffdüse (41) mit Düsenöffnung (42) in die Mischkammer (51) des Ammoniakgasgenerators (100) mit einem definierten Sprühwinkel eingesprüht und in feine Tröpfchen verteilt. Zusätzlich wird ein Trägergasstrom (C) über den Einlass (56) in die Mischkammer (51) eingeleitet. Dieser Trägergasstrom (C) wird auf eine Lochscheibe (48) geleitet, in dessen Zentrum die Düsenöffnung (42) der Düse (41) angeordnet ist. Die Düsenöffnung (42) befindet sich auf Höhe der Lochscheibe. Durch die Lochscheibe (48), die eine Vielzahl an Öffnungen (49) aufweist, wird der Trägergasstrom in eine Vielzahl an Teilströmen von Trägergas parallel zur Strömungsrichtung der Katalysatoreinheit erzeugt, wodurch eine Schleierströmung mit Tröpfchen der eingedüsten Ammoniakvorläufersubstanz-Lösung erzeugt wird, die axial in Richtung des Hydrolysekatalysators (60) auf die Hydrolysekatalysatorstirnfläche (61) geführt wird. Der Katalysator (60) ist derart ausgeführt, dass das erste Segment (62) einen elektrisch heizbaren Metallträger mit Hydrolysebeschichtung darstellt. Anschließend folgen ein nichtbeheizter Metallträgerkatalysator (63) ebenfalls mit Hydrolysebeschichtung und ein nichtbeheizter Katalysator (64) mit Hydrolysebeschichtung als Mischerstruktur ausgeführt zur besseren radialen Verteilung. Das erzeugte Ammoniakgas (D) verlässt zusammen mit dem heißen Trägergasstrom den Generator (100) über die Auslasskammer (55) mit dem Auslass (80) und Ventil (81). Der Generator kann durch eine Mantelheizung (52) um das Gehäuse (54) der Katalysatoreinheit zusätzlich beheizt werden. Bis auf den Kopfbereich in dem sich die Eindüsungsvorrichtung (40) befindet, ist der Ammoniakgasgenerator (100) mit einer Wärmeisolierung (53) aus mikroporösem Dämmmaterial umgeben.

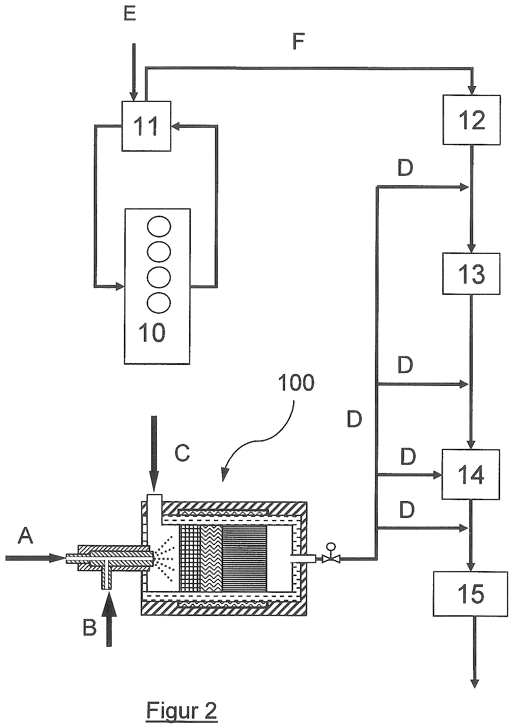

Mit Figur 2 wird ein schematischer Stoffstrom einer Abgasnachbehandlung an einem Verbrennungsmotor (10) dargestellt. Dabei wird das vom Verbrennungsmotor (10) kommende Abgas über eine Aufladeeinheit (11) geführt und im Gegenstrom Zuluft (E) für die Verbrennungskraftmaschine verdichtet. Das Abgas (F) wird über einen Oxidationskatalysator (12) geführt, um eine höhere NO₂-Konzentration im Verhältnis zu NO zu erreichen. Der aus dem Ammoniakgasgenerator (100) kommende ammoniakhaltige Gasstrom (D) kann sowohl vor als auch nach einem Partikelfilter (13) zugegeben und eingemischt werden. Dabei kann ein zusätzlicher Gasmischer (14) in Form eines statischen Mischers oder z.B. eines Venturimischers verwendet werden. Es kann auch vorgesehen sein, dass der ammoniakhaltige Gasstrom (D) in Höhe des zusätzlichen Gasmischers (14) bzw. in den zusätzlichen Gasmischer (14) oder nach dem zusätzlichen Gasmischers (14) in den Abgasstrang eingebracht wird. In jedem Fall wird der ammoniakhaltige Gasstrom (D) jedoch vor dem SCR-Katalysator (15) in den Abgasstrang eingeleitet. Am SCR-Katalysator (15) erfolgt die Reduzierung der NOx mit Hilfe des Reduktionsmittels NH₃ (SCR = selective catalytic reduction). Dabei kann der Ammoniakgasgenerator mit separatem Trägergas oder auch mit einem Abgasteilstrom betrieben werden.

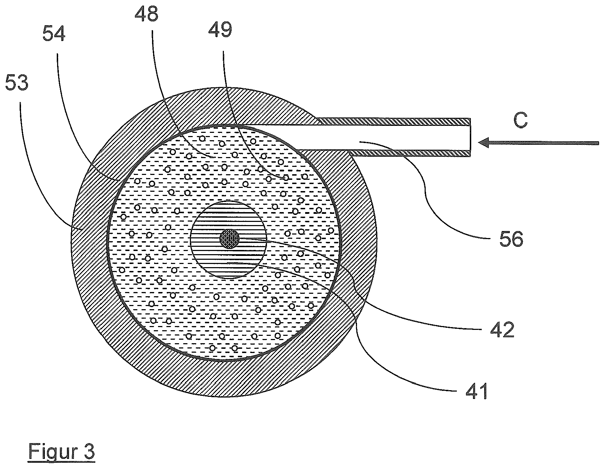

Mit Figur 3 ist eine Detailansicht der Mischkammer (51) im Bereich der Trägergasstromzuführung gezeigt. Das Gehäuse (54) der Katalysatoreinheit ist im Bereich der Mischkammer (51) mit einer Wärmeisolierung (53) aus mikroporösem Dämmmaterial umgeben. Die Zuführung des Trägergases (C) erfolgt im Kopfbereich des Ammoniakgasgenerators bzw. im Kopfbereich der Mischkammer (51). Dabei ist der Einlass (56) für den Trägergasstrom (C) derart gestaltet, dass der Einlass (56) in Strömungsrichtung des Katalysators hinter der Lochscheibe (48) angeordnet ist. In Höhe der Düsenöffnung (42) der Düse (41) ist eine Lochscheibe (48) mit einer Vielzahl an Löchern (49) angeordnet. Diese Lochscheibe erzeugt eine Vielzahl an Trägergasteilströmen, die wiederum eine abwärtsgerichtete Schleierströmung im Generator in Richtung Katalysator einstellt.

### Beispiele

### Ausführungsbeispiel 1:

Der Aufbau entspricht prinzipiell dem mit Figur 1 wiedergegebenen Ammoniakgasgenerator.

Der Ammoniak-Generator ist ausgelegt für eine Dosiermenge von 50 - 2000 g/h NH₃ und als zylindrischer Rohrreaktor ausgeführt. Im Kopfbereich befindet sich mittig angeordnet eine Zweistoffdüse der Firma Albonair (Dosiersystem Albonair) mit einem Sprühwinkel von alpha = 20 °. Der Sauterdurchmesser im gewählten Betriebsbereich liegt bei D₃₂ = 37µm. Die Länge der Mischkammer beträgt ca. 250 mm.

Um die Düsenöffnung befindet sich eine Lochscheibe mit 90 mm Durchmesser über den gesamten Querschnitt mit einer Aussparung von 30 mm um die zentral angeordnete Düse. Die Düsenöffnung befindet sich auf Höhe der Lochscheibe.
Die Bohrungen der Lochscheibe betragen alle 5 mm und sind gleichmäßig über den Querschnitt verteilt.

Bei einer weiteren Ausführung werden die Bohrungen von innen (3 mm) nach außen (8mm) hin größer. Durch die Lochscheibe vor dem Düsenaustritt wird ein geringer Staudruck von 0,2 bis 2 mbar erzeugt und damit eine gleichmäßige axiale Strömung des Transportgasstroms und damit vor allem im Randbereich eine Strömung erzwungen, die sich als Schleier schützend um den Wandbereich legt (Schleierströmung). Dadurch wird verhindert, dass durch eine zu starke Wirbelströmung Tröpfchen an die Wand geschleudert werden, zu Ablagerungen führen und der Gesamtammoniakbildungsgrad von üblich 97% auf unter 90% absinkt.

Der gesamte Bereich der Mischkammer inklusive der metallischen Lochscheibe sind mit einem Hydrolysekatalysator (katalytisch aktivem TiO₂, Anatas, washcoat ca. 100 g/l, Fa. Interkat) beschichtet zur Vermeidung unerwünschter Nebenreaktionen der eventuelle an den Flächen landenden, versprühten Lösung.

Es hat sich gezeigt, dass durch die gleichmäßige Verteilung der Tröpfchen auf der Katalysatorstirnfläche es nicht zu einer unerwünschten, punktuellen Überbelastung der Katalysatorfläche kommt. In diesem Fall wird die gesamte Fläche für die Umsetzung der Lösung in Ammoniak ohne Nebenprodukte genutzt. Dadurch können keine Ablagerungen entstehen, wie sich bei Tests mit Laufzeiten von mehreren 100 Stunden gezeigt hat. Zeigen sich keine Ablagerungen ist von einer vollständigen Umsetzung der Ammoniakvorläuferlösung auszugehen. Wartung bzgl. Ablagerungen wird in diesem Fall nicht mehr notwendig.

Dabei hat sich gezeigt, dass für diesen Aufbau als Ammoniakvorläuferlösung sowohl wässrige Guanidiniumformiatlösung in der Konzentration von 20 % bis 60 % verwendet werden kann als auch wässrige Harnstofflösung in der Konzentration von 25 % bis 40 % als auch wässrige Mischungen aus Guanidiniumformiat und Harnstoff.

Durch die noch vorhandenen Tröpfchen kommt es an der Katalysatorstirnfläche zu einer Abkühlung von etwa 120 - 150 °C. Aus diesem Grund ist der Reaktor derart ausgeführt, dass die mit dem heißen Trägergasstrom zugeführte Wärmemenge, der integrierte heizbare Hydrolysekatalysator und weitere Energiezuführungen soviel Energie einbringen, dass für die dosierte Menge Lösung keine Abkühlung unter ca. 280 °C stattfindet.

Neben der versprühten Lösung wird ein heißer Trägergasstrom von etwa 1 - 5 kg/h ebenfalls im Kopfbereich des Ammoniakgasgenerators derart eingeleitet, dass er sich in einer Schleierströmung um die Innenwand der Katalysatoreinheit legt und laminar durch die Mischkammer geleitet wird. Dadurch wird weiter verhindert, dass versprühte Tröpfchen mit der Innenwand in Kontakt kommen. Der Trägergasstrom wird vor Turbo abgezweigt und über eine Drosseleinrichtung dem Ammoniakgenerator zugeführt. Durch den höheren Druck vor Turbo wird die notwendige Druckdifferenz von 10 mbar über den Reaktor zur Einmischstelle im Abgasstrom vor SCR-Katalysator überwunden und damit der Trägergasstrom durch den Reaktor bewegt. Die Temperatur des Abgasteilstroms beträgt je nach Betriebszustand zwischen 250 °C und 550 °C. Die Temperaturregelung erfolgt in Verbindung mit an der Katalysatorstirnfläche, im und nach dem Katalysator angeordneten Temperatursensoren (Typ K). Alle Außenflächen des Reaktors sind mit einer Isolierung umgeben. Nur der Kopfbereich, in dem sich die Eindüsung der Lösung befindet ist zur besseren Wärmeableitung nicht isoliert.

Im Anschluss an die Mischkammer ist ein beheizbarer Metallträgerkatalysator mit 90 mm Durchmesser und 46,5 Zellen pro cm² (300 cpsi) angeflanscht (Emitec Emicat, maximale Leistung 900 W). Dieser ist als Hydrolysekatalysator ausgeführt, mit katalytisch aktivem TiO₂ (Anatas, washcoat ca. 100 g/l, Fa. Interkat) beschichtet und wird so geregelt, dass die Temperatur an der Katalysatorstirnfläche zwischen 280 und 400 °C liegt. Dabei wird lediglich soviel Energie zugeführt, dass die Abkühlung durch die Verdunstung der Tröpfchen kompensiert wird. Zur Erreichung einer Raumgeschwindigkeit von bis zu minimal 7.000 1/h wird ein weiterer Hydrolysekatalysator mit 62 Zellen pro cm² (400 cpsi) nachgeschaltet, so dass sich ein Gesamtkatalysatorvolumen von etwa 900 ml ergibt.

Der am heißen Hydrolysekatalysator erzeugte Ammoniak strömt frei im Fußbereich, zentral aus einer Auslassöffnung aus dem Reaktorendstück aus. Dabei wird der Auslassbereich vorzugsweise konisch geformt, um Wirbelbildung an Kanten und damit Ablagerungen von möglichen Rückständen zu vermeiden. Das Gasgemisch aus dem Ammoniakgasgenerator wird vorzugsweise mit einer Temperatur > 80 °C zur Vermeidung von Ammoniumcarbonatablagerungen dem motorischen Abgasstrom vor SCR-Katalysator zugeben und in diesem Abgasstrom homogen über einen statischen Mischer verteilt.

Als Material für alle metallischen Bauteile wird 1.4301 (V2A, DIN X 5 CrNi18-10) alternativ 1.4401 (V4A, DIN X 2 CrNiMo 17-12-2), 1.4767 oder auch andere abgaskatalysatortypische Fe-Cr-Al-Legierungen verwendet.

### Ausführungsbeispiel 2:

In Ausführungsbeispiel 2 ist der Ammoniakgenerator derart ausgeführt, dass anstelle einer Zweistoffdüse eine Einstoffdüse (Injektor, Hilite Gen 2 Liquid Only) mit vergleichbarem Sprühbild zum Einsatz kommt. Dabei wird die Zerstäubung vollkommen ohne zusätzliche Druckluft erreicht. Der Sauterdurchmesser liegt bei dieser Ausführung bei D₃₂ = 29 µm. Entsprechend ist bei dieser Ausführung keine Druckluft bzw. zusätzliche Luftpumpe für den Betrieb der Zerstäubung notwendig.

### Ausführungsbeispiel 3:

In Ausführungsbeispiel 3 wird der Ammoniakgenerator derart betrieben, dass Umgebungsluft als Trägergasstrom durch den Ammoniakgenerator gesaugt wird. Der Generator entspricht der Ausführung in Beispiel 1. Als Trägergasstrom wird kalte Umgebungsluft anstelle von einem heißen Abgasnebenstrom verwendet. Die Temperatur der Umgebungsluft beträgt zwischen 10 °C und 25 °C. Die Druckdifferenz über den Reaktor bis zur Einmischstelle im Abgasstrom wird mittels einer Venturidüse im Abgasstrom überwunden. Im Abgasstrom ist stromauf des SCR-Katalysators ein Venturigasmischer derart eingebaut, dass ein entsprechender Unterdruck Umgebungsluft als Trägergasstrom in und durch den Reaktor saugt und mit Ammoniak angereichertes Gas in den Abgasstrom einmischt. Dabei liegt die Einmischstelle des ammoniakhaltigen Gases aus dem Reaktor mittig in der in der Abgasströmung integrierten Venturidüse im engsten Querschnitt. Über mehrere Bohrungen in der Venturidüsenengstelle wird das Gas aus dem Reaktor gesaugt und radial gleichmäßig verteilt dem Abgasstrom zugeführt.

## Patentansprüche

1. Ammoniakgasgenerator (100) zur Erzeugung von Ammoniak aus einer Lösung einer Ammoniakvorläufersubstanz umfassend
i) eine Katalysatoreinheit (70), die einen Katalysator (60) zur Zersetzung und/ oder Hydrolyse von Ammoniakvorläufersubstanzen in Ammoniak und eine dem Katalysator (60) vorgelagerte Mischkammer (51) umfasst, wobei der Katalysator (60) ein Katalysatorvolumen V_{Kat} und die Mischkammer (51) ein Mischkammervolumen V_{Misch} aufweist,
ii) eine Eindüsungsvorrichtung (40) zur Einbringung der Lösung der Ammoniakvorläufersubstanz in die Mischkammer (51), und
iii) einen Auslass (80) für das gebildete Ammoniakgas,
**dadurch gekennzeichnet, dass**
die Eindüsungsvorrichtung (40) eine Düse (41) umfasst, die Tropfen mit einem Sauterdurchmesser D₃₂ von 26 bis 100 µm erzeugt und weiterhin **dadurch gekennzeichnet, dass** das Verhältnis des Volumens der Mischkammer V_{Misch} zum Volumen des Katalysators V_{Kat} dem Verhältnis von 1 : 1 bis 5 : 1 entspricht.

2. Ammoniakgasgenerator (100) nach Anspruch 1,
**dadurch gekennzeichnet, dass**
die Eindüsungsvorrichtung (40) eine Düse (41) umfasst, die Tropfen mit einem Sauterdurchmesser D₃₂ von 26 bis 40 µm erzeugt.

3. Ammoniakgasgenerator (100) nach mindestens einem der Ansprüche 1 oder 2,
**dadurch gekennzeichnet, dass**
die Eindüsungsvorrichtung (40) eine Zweistoffdüse (41) ist, in der die in die Mischkammer einzubringende Lösung mit einem Trägergas, insbesondere mit Druckluft beaufschlagt wird.

4. Ammoniakgasgenerator (100) nach mindestens einem der vorgenannten Ansprüche,
**dadurch gekennzeichnet, dass**
die Düse (41) eine erste Anzahl an Düsenöffnungen zur Einbringung der Lösung in die Mischkammer aufweist, die von einer zweiten Anzahl an Düsenöffnungen zur Einbringung von Druckluft in die Mischkammer ringförmig umgeben ist.

5. Ammoniakgasgenerator (100) nach mindestens einem der Ansprüche 1 oder 2,
**dadurch gekennzeichnet, dass**
die Düse eine Einstoffdüse oder ein Injektor ist.

6. Ammoniakgasgenerator (100) nach mindestens einem der vorgenannten Ansprüche,
**dadurch gekennzeichnet, dass**
der Ammoniakgasgenerator mindestens einen Einlass (56) für ein Trägergas umfasst, der insbesondere einen senkrecht zur Katalysatorstirnfläche gerichteten Trägergasstrom erzeugt oder/und
**dadurch gekennzeichnet, dass**
der Ammoniakgasgenerator eine Lochscheibe (48) umfasst, in dessen Zentrum die Düsenöffnung der Düse (41) angeordnet ist oder/und
**dadurch gekennzeichnet, dass**
der Ammoniakgasgenerator eine Lochscheibe (48) umfasst, die eine Vielzahl an Öffnungen aufweist, die insbesondere eine Vielzahl an Teilströmen von Trägergas parallel zur Strömungsrichtung der Katalysatoreinheit erzeugen oder/und
**dadurch gekennzeichnet, dass**
der Katalysator (60) ein Hydrolysekatalysator ist.

7. Ammoniakgasgenerator (100) nach mindestens einem der vorgenannten Ansprüche,
**dadurch gekennzeichnet, dass**
der Ammoniakgasgenerator weiterhin eine Dosiereinheit (30) zur Dosierung der Lösung der Ammoniakvorläufersubstanz umfasst, die der Eindüsungsvorrichtung (40) vorgeschaltet ist.

8. Verfahren zur Erzeugung von Ammoniak aus einer Lösung einer Ammoniakvorläufersubstanz unter Verwendung eines Ammoniakgasgenerators (100) umfassend
i) eine Katalysatoreinheit (70), die einen Katalysator (60) zur Zersetzung und/ oder Hydrolyse von Ammoniakvorläufersubstanzen in Ammoniak und eine dem Katalysator (60) vorgelagerte Mischkammer (51) umfasst, wobei der Katalysator (60) ein Katalysatorvolumen V_{Kat} und die Mischkammer (51) ein Mischkammervolumen V_{Misch} aufweist,
ii) eine Eindüsungsvorrichtung (40) zur Einbringung der Lösung der Ammoniakvorläufersubstanz in die Mischkammer (51), und
iii) einen Auslass (80) für das gebildete Ammoniakgas,
**dadurch gekennzeichnet, dass**
in dem Verfahren die Lösung der Ammoniakvorläufersubstanz in Form von Tropfen mit einem Sauterdurchmesser D₃₂ von 26 bis 100 µm in die Mischkammer (51) eingebracht, insbesondere eingedüst wird und weiterhin
**dadurch gekennzeichnet, dass** das Verhältnis des Volumens der Mischkammer V_{Misch} zum Volumen des Katalysators V_{Kat} dem Verhältnis von 1 : 1 bis 5 : 1 entspricht.

9. Verfahren nach Anspruch 8,
**dadurch gekennzeichnet, dass**
in dem Verfahren ein Trägergas oder ein Trägergasstrom, insbesondere ein senkrecht zur Katalysatorstirnfläche geführter Trägergasstrom, mit einer Temperatur T_{(K)} im Bereich von 10 bis 200 °C in die Mischkammer (51) eingebracht, insbesondere eingedüst wird.

10. Verfahren nach Anspruch 8,
**dadurch gekennzeichnet, dass**
in dem Verfahren ein Trägergas oder ein Trägergasstrom, insbesondere ein senkrecht zur Katalysatorstirnfläche geführter Trägergasstrom, mit einer Temperatur T_{(K)} im Bereich von 250 bis 550 °C in die Mischkammer (51) eingebracht, insbesondere eingedüst wird.

11. Verfahren nach mindestens einem der Ansprüche 8 bis 10,
**dadurch gekennzeichnet, dass**
die Lösung der Ammoniakvorläufersubstanz als Aerosol in eine Vielzahl an parallelen Strahlen des Trägergases eingebracht wird.

12. Abgasnachbehandlungssystem für Abgasleitungen von Fahrzeugen umfassend einen Ammoniakgasgenerator (100) nach mindestens einem der Ansprüche 1 bis 7.

13. Abgasnachbehandlungssystem nach Anspruch 12,
**dadurch gekennzeichnet, dass**
das System weiterhin einen Venturimischer umfasst, wobei der Auslass (80) für das gebildete Ammoniakgas und der Venturimischer durch eine Leitung verbunden sind, insbesondere direkt verbunden sind.

14. Abgasnachbehandlungssystem nach Anspruch 13,
**dadurch gekennzeichnet, dass**
der Venturimischer Bestandteil der Abgasleitung eines Fahrzeugs ist.

15. Verwendung eines Ammoniakgasgenerators (100) nach mindestens einem der Ansprüche 1 bis 7 zur Reduktion von Stickoxiden in Abgasen, insbesondere Abgasen aus Verbrennungsmotoren, aus Gasmotoren, aus Dieselmotoren oder aus Benzinmotoren.

## Claims

1. Ammonia gas generator (100) for producing ammonia from a solution of an ammonia precursor substance, comprising
i) a catalyst unit (70), which comprises a catalyst (60) for the decomposition and/or hydrolysis of ammonia precursor substances into ammonia and a mixing chamber (51) provided upstream of the catalyst (60), the catalyst (60) having a catalyst volume V_{cat} and the mixing chamber (51) having a mixing chamber volume Vₘᵢₓ,
ii) an injection device (40) for introducing the solution of the ammonia precursor substance into the mixing chamber (51), and
iii) an outlet (80) for the formed ammonia gas,
**characterised in that** the injection device (40) comprises a nozzle (41) which produces drops having a Sauter mean diameter D₃₂ of from 26 to 100 µm and further **characterised in that** the ratio of the volume of the mixing chamber Vₘᵢₓ to the volume of the catalyst V_{cat} corresponds to the ratio of from 1:1 to 5:1.

2. Ammonia gas generator (100) according to claim 1, **characterised in that** the injection device (40) comprises a nozzle (41) which produces drops having a Sauter mean diameter D₃₂ of from 26 to 40 µm.

3. Ammonia gas generator (100) according to at least one of claims 1 or 2, **characterised in that** the injection device (40) is a binary nozzle (41) in which the solution to be introduced into the mixing chamber is supplied with a carrier gas, in particular with compressed air.

4. Ammonia gas generator (100) according to at least one of the preceding claims, **characterised in that** the nozzle (41) has a first number of nozzle openings for introducing the solution into the mixing chamber, which is annularly surrounded by a second number of nozzle openings for introducing compressed air into the mixing chamber.

5. Ammonia gas generator (100) according to at least one of claims 1 or 2, **characterised in that** the nozzle is a unary nozzle or an injector.

6. Ammonia gas generator (100) according to at least one of the preceding claims, **characterised in that** the ammonia gas generator comprises at least one inlet (56) for a carrier gas, which produces in particular a carrier gas flow directed perpendicularly to the catalyst end face and/or
**characterised in that** the ammonia gas generator comprises a perforated disc (48), in the centre of which the nozzle opening of the nozzle (41) is arranged and/or
**characterised in that** the ammonia gas generator comprises a perforated disc (48) which comprises a plurality of openings, which produce in particular a plurality of partial flows of carrier gas in parallel with the flow direction of the catalyst unit and/or
**characterised in that** the catalyst (60) is a hydrolysis catalyst.

7. Ammonia gas generator (100) according to at least one of the preceding claims, **characterised in that** the ammonia gas generator further comprises a dosing unit (30) for dosing the solution of the ammonia precursor substance, which dosing unit is connected upstream of the injection device (40).

8. Method for producing ammonia from a solution of an ammonia precursor substance using an ammonia gas generator (100) comprising
i) a catalyst unit (70), which comprises a catalyst (60) for the decomposition and/or hydrolysis of ammonia precursor substances into ammonia and a mixing chamber (51) provided upstream of the catalyst (60), the catalyst (60) having a catalyst volume V_{cat} and the mixing chamber (51) having a mixing chamber volume Vₘᵢₓ,
ii) an injection device (40) for introducing the solution of the ammonia precursor substance into the mixing chamber (51), and
iii) an outlet (80) for the formed ammonia gas,
**characterised in that**, in the method, the solution of the ammonia precursor substance is introduced, in particular injected, into the mixing chamber (51) in the form of drops having a Sauter mean diameter D₃₂ of from 26 to 100 µm and further **characterised in that** the ratio of the volume of the mixing chamber Vₘᵢₓ to the volume of the catalyst V_{cat} corresponds to the ratio of from 1:1 to 5:1.

9. Method according to claim 8, **characterised in that**, in the method, a carrier gas or a carrier gas flow, in particular a carrier gas flow guided perpendicularly to the catalyst end face, is introduced, in particular injected, into the mixing chamber (51) at a temperature T_{(K)} in the range of from 10 to 200 °C.

10. Method according to claim 8, **characterised in that**, in the method, a carrier gas or a carrier gas flow, in particular a carrier gas flow guided perpendicularly to the catalyst end face, is introduced, in particular injected, into the mixing chamber (51) at a temperature T_{(K)} in the range of from 250 to 550 °C.

11. Method according to at least one of claims 8 to 10, **characterised in that** the solution of the ammonia precursor substance is introduced into a plurality of parallel streams of the carrier gas as an aerosol.

12. Exhaust-gas aftertreatment system for exhaust pipes of vehicles, comprising an ammonia gas generator (100) according to at least one of claims 1 to 7.

13. Exhaust-gas aftertreatment system according to claim 12, **characterised in that** the system further comprises a venturi mixer, the outlet (80) for the formed ammonia gas and the venturi mixer being connected, in particular directly connected, by a pipe.

14. Exhaust-gas aftertreatment system according to claim 13, **characterised in that** the venturi mixer is a component of the exhaust pipe of a vehicle.

15. Use of an ammonia gas generator (100) according to at least one of claims 1 to 7 for reducing nitrogen oxides in exhaust gases, in particular exhaust gases from internal combustion engines, from gas engines, from diesel engines or from petrol engines.

## Revendications

1. Générateur de gaz ammoniac (100) pour la production d'ammoniac à partir d'une solution d'une substance précurseur d'ammoniac comprenant
i) une unité de catalyseur (70), qui comprend un catalyseur (60) pour la décomposition et/ou l'hydrolyse de substances précurseurs d'ammoniac en ammoniac et une chambre de mélange (51) disposée en amont du catalyseur (60), où le catalyseur (60) présente un volume de catalyseur V_{cat} et la chambre de mélange (51) présente un volume de chambre de mélange V_{mél},
ii) un dispositif d'injection (40) pour l'introduction de la solution de la substance précurseur d'ammoniac dans la chambre de mélange (51), et
iii) une sortie (80) pour le gaz ammoniac formé,
**caractérisé en ce que**
le dispositif d'injection (40) comprend une buse (41) qui produit des gouttes ayant un diamètre de Sauter D₃₂ de 26 à 100 µm et
**caractérisé en outre en ce que** le rapport du volume de la chambre de mélange V_{mél} au volume du catalyseur V_{cat} correspond au rapport de 1:1 à 5:1.

2. Générateur de gaz ammoniac (100) selon la revendication 1, **caractérisé en ce que** le dispositif d'injection (40) comprend une buse (41) qui produit des gouttes ayant un diamètre de Sauter D₃₂ de 26 à 40 µm.

3. Générateur de gaz ammoniac (100) selon au moins l'une des revendications 1 ou 2, **caractérisé en ce que** le dispositif d'injection (40) est une buse à deux substances (41) dans laquelle la solution destinée à être introduite dans la chambre de mélange est additionnée d'un gaz vecteur, en particulier d'air comprimé.

4. Générateur de gaz ammoniac (100) selon au moins l'une des revendications précitées, **caractérisé en ce que** la buse (41) présente un premier nombre d'ouvertures de buse pour l'introduction de la solution dans la chambre de mélange, qui est entouré en forme d'anneau par un second nombre d'ouvertures de buse pour l'introduction d'air comprimé dans la chambre de mélange.

5. Générateur de gaz ammoniac (100) selon au moins l'une des revendications 1 ou 2, **caractérisé en ce que** la buse est une buse à une substance ou un injecteur.

6. Générateur de gaz ammoniac (100) selon au moins l'une des revendications précitées, **caractérisé en ce que** le générateur de gaz ammoniac comprend au moins une entrée (56) pour un gaz vecteur, qui produit en particulier un courant de gaz vecteur dirigé perpendiculairement à la surface frontale du catalyseur et/ou **caractérisé en ce que** le générateur de gaz ammoniac comprend une plaque perforée (48) au centre de laquelle est disposée l'ouverture de buse de la buse (41) et/ou **caractérisé en ce que** le générateur de gaz ammoniac comprend une plaque perforée (48) qui présente une multiplicité d'ouvertures qui produisent en particulier une multiplicité de courants partiels de gaz vecteur parallèlement à la direction d'écoulement de l'unité de catalyseur et/ou **caractérisé en ce que** le catalyseur (60) est un catalyseur d'hydrolyse.

7. Générateur de gaz ammoniac (100) selon au moins l'une des revendications précitées, **caractérisé en ce que** le générateur de gaz ammoniac comprend en outre une unité de dosage (30) pour le dosage de la solution de la substance précurseur d'ammoniac qui est disposée en amont du dispositif d'injection (40).

8. Procédé pour la production d'ammoniac à partir d'une solution d'une substance précurseur d'ammoniac au moyen d'un générateur de gaz ammoniac (100) comprenant
i) une unité de catalyseur (70), qui comprend un catalyseur (60) pour la décomposition et/ou l'hydrolyse de substances précurseurs d'ammoniac en ammoniac et une chambre de mélange (51) disposée en amont du catalyseur (60), où le catalyseur (60) présente un volume de catalyseur V_{cat} et la chambre de mélange (51) présente un volume de chambre de mélange V_{mél},
ii) un dispositif d'injection (40) pour l'introduction de la solution de la substance précurseur d'ammoniac dans la chambre de mélange (51), et
iii) une sortie (80) pour le gaz ammoniac formé,
**caractérisé en ce que**, dans le procédé, la solution de la substance précurseur d'ammoniac est introduite, en particulier injectée, dans la chambre de mélange (51) sous forme de gouttes ayant un diamètre de Sauter D₃₂ de 26 à 100 µm et **caractérisé en outre en ce que** le rapport du volume de la chambre de mélange V_{mél} au volume du catalyseur V_{cat} correspond au rapport de 1:1 à 5:1.

9. Procédé selon la revendication 8, **caractérisé en ce que**, dans le procédé, un gaz vecteur ou un courant de gaz vecteur, en particulier un courant de gaz vecteur guidé perpendiculairement à la surface frontale du catalyseur, est introduit, en particulier injecté, dans la chambre de mélange (51) à une température T_{(K)} dans le domaine de 10 à 200°C.

10. Procédé selon la revendication 8, **caractérisé en ce que**, dans le procédé, un gaz vecteur ou un courant de gaz vecteur, en particulier un courant de gaz vecteur guidé perpendiculairement à la surface frontale du catalyseur, est introduit, en particulier injecté, dans la chambre de mélange (51) à une température T_{(K)} dans le domaine de 250 à 550°C.

11. Procédé selon au moins l'une des revendications 8 à 10, **caractérisé en ce que** la solution de la substance précurseur d'ammoniac est introduite sous forme d'aérosol dans une multiplicité de courants du gaz vecteur parallèles.

12. Système de traitement ultérieur de gaz d'échappement pour conduits de gaz d'échappement de véhicules comprenant un générateur de gaz ammoniac (100) selon au moins l'une des revendications 1 à 7.

13. Système de traitement ultérieur de gaz d'échappement selon la revendication 12, **caractérisé en ce que** le système comprend en outre un mélangeur à venturi, où la sortie (80) pour le gaz ammoniac formé et le mélangeur à venturi sont reliés par un conduit, en particulier sont reliés directement.

14. Système de traitement ultérieur de gaz d'échappement selon la revendication 13, **caractérisé en ce que** le mélangeur à venturi est un constituant du conduit de gaz d'échappement d'un véhicule.

15. Utilisation d'un générateur de gaz ammoniac (100) selon au moins l'une des revendications 1 à 7 pour la réduction d'oxydes d'azote dans des gaz d'échappement, en particulier des gaz d'échappement provenant de moteurs à combustion interne, de moteurs à gaz, de moteurs diesel ou de moteurs à essence.
